# EUROPÄISCHE PATENTSCHRIFT

(11) **EP 0 730 503 B1**
(45) Veröffentlichungstag und Bekanntmachung des Hinweises auf die Patenterteilung: **25.03.1998**
(21) Anmeldenummer: 95901319.4
(22) Anmeldetag: 22.11.1994
(51) Int. Cl.: B09C 1/10, C02F 11/02

(54) **VERFAHREN ZUR REINIGUNG UND AUFBEREITUNG VON VERUNREINIGTEM GUT**
PROCESS FOR PURIFYING AND TREATING POLLUTED MATERIALS
PROCEDE DE PURIFICATION ET DE TRAITEMENT DE MATIERES POLLUEES

(30) Priorität: 23.11.1993 DE 4339875
(43) Veröffentlichungstag der Anmeldung: 11.09.1996
(73) Patentinhaber: Hohnecker, Helmut, Prof. Dipl.-Ing., 71573 Allmersbach/Tal (DE)
(72) Erfinder: Hohnecker, Helmut, Prof. Dipl.-Ing., 71573 Allmersbach/Tal (DE)
(74) Vertreter: Schuster, Gregor, Dipl.-Ing.
(86) Internationale Anmeldenummer: DE9401374
(87) Internationale Veröffentlichungsnummer: WO9514544

(56) Entgegenhaltungen:
- EP-A- 0 192 285
- WO-A-91/02565
- DE-A- 3 720 833
- DE-A- 4 104 623
- US-A- 5 232 584

## Beschreibung

Die Erfindung geht aus von einem Verfahren zur Reinigung und Aufbereitung von verunreingtem Gut nach der Gattung des Hauptanspruchs.

Bei bekannten Verfahren zur Reinigung und Aufbereitung von verunreinigtem Gut mittels Mikroorganismen wird das verunreinigte Gut die Verunreinigungen abbauende Mikroorganismen und erforderlichenfalls Nährstoffe für die Mikroorganismen in einen Behandlungsraum, beispielsweise in einen Drehtrommelreaktor eingebracht und bewässert. Solche Verfahren werden insbesondere zur Reinigung von kontaminiertem Erdreich eingesetzt. Das zu behandelnde Erdreich wird bei einem bekannten Verfahren (DE-OS 37 20 833) als Lage oder Mieten auf eine feststehende Bodenplatte aufgebracht und bewässert. Alternativ wird bei diesem Verfahren die Behandlung in einer Drehtrommel durchgeführt, wobei das Erdreich in loser Schüttung durch eine sich langsam drehende Drehtrommel geführt wird. Die Verunreinigungen abbauende Mikroorganismen werden ausgesucht, zusammengestellt und dem zu reinigenden Erdreich zusammen mit einer passenden Nährlösung zugegeben.

Verfahren wie dieses weisen den Nachteil auf, daß sie zeitaufwendig und damit kostenintensiv sind. Aufgrund der relativ festen Konsistenz des Behandlungsguts ist die Bioverfügbarkeit, also die Angriffsmöglichkeit für die Mikroorganismen gering, so daß die Behandlung entsprechend lange dauert.

Ein weiterer Nachteil dieser Verfahren sind die hohen Kosten für die zugegebenen Mikroorganismen bzw. die lange Dauer, bis geeignete Mikroorganismen in ausreichender Menge angereichert sind.

Aus einem anderen gattungsgemäßen Verfahren ist bekannt (EP-A-0 192 285), dem verunreinigten Gut zur Dekontaminierung Belebtschlamm aus Kläranlagen zuzugegeben, der sowohl die Verunreinigungen abbauende Mikroorganismen, als auch die zur Anreicherung der Mikroorganismen notwendigen Nährstoffe enthält. Es handelt sich dabei jedoch um ein Verfahren, bei dem das Gemisch aus verunreinigtem Gut und Belebtschlämmen bewässert wird. Durch den hohen Wasseranteil ist zwar das für einen optimalen biologischen Abbau notwendige Nachlösen der Schadstoffe in die wässrige Phase gewährleistet, als Behandlungsfläche muß aber ein Behälter verwendet werden und das Abwasser abgeleitet oder abgetrennt werden, was die Kosten für die Behandlung erhöht. Überdies ist ein Verfahren mit derart hohem Wasseranteil ungeeignet, wenn die Dekontaminierung mit Hilfe von Mieten stattfinden soll.

Das erfindungsgemäße Verfahren mit den Merkmalen des Hauptanspruchs hat nicht nur den bekannten Vorteil, daß zum einen durch die Zugabe von Schlämmen, wie z.B. Klärschlämme, die bereits die Verunreinigungen abbauende Mikroorganismen sowie die Nährstoffe für die Mikroorganismen enthalten, das Verfahren vereinfacht und verbilligt wird.

Erfindungsgemäß kann durch die Verwendung von Schlämmen, deren Feuchtigkeitsgehalt auf die Boden- und die Schlammbeschaffenheit abgestimmt ist, die Behandlung aufgrund der dadurch erhöhten Abbaurate verkürzt und damit die Kosten für die Behandlung gegenüber den bekannten Verfahren reduziert werden. Darüber hinaus ist auch der erreichbare Dekontaminierungsgrad höher als bei bekannten Verfahren. Es hat sich nämlich überraschenderweise gezeigt, daß der Schadstoffabbau durch die Mikroorganismen bei einem auf Boden- und Schlammbeschaffenheit abgestimmten Wasseranteil deutlich verbessert und beschleunigt ist. Man war bisher davon ausgegangen, daß Abbaurate und Dekontaminierungsgrad um so höher seien, je höher der Wasseranteil des Gemischs aus verunreinigtem Gut und Mikroorganismen sowie deren Nährstoffe ist, da in diesem Fall ein besseres Nachlösen in die wässrige Phase gewährleistet sei. Tatsächlich verbessern sich die Abbaurate und der Dekontaminierungsgrad nur bis zu einem bestimmten Grenzwert des Wasseranteils. Höhere Wasseranteile bringen keine weitere Verbesserung. Als besonders geeignet hat sich ein Wasseranteil von ca. 30 - 50% herausgestellt. Ein Gemisch aus verunreinigtem Gut und Schlämmen mit einem derartigen Wasseranteil ist insbesondere zur Aufschichtung zu Mieten geeignet. Durch Mieten wird zudem die wirksame Oberfläche des zu behandelnden Gutes vergrößert, wodurch Luft und Feuchtigkeit besser einwirken können.

Nach einer vorteilhaften Ausgestaltung der Erfindung werden als Schlämme Klärschlämme aus privaten, kommunalen oder industriellen Abwasserreinigungsanlagen oder Speicheranlagen verwendet. Klärschlämme enthalten nämlich durch das sehr breite Spektrum der anfallenden Abfallstoffe eine Mikroorganismenflora, die prinzipiell alle zur Dekontaminierung von biologisch abbaubaren Verunreinigungen geeigneten Mikroorganismen sowie deren Nährstoffe enthält. Auf diese Weise erhält man aus zwei verschiedenen Abfallprodukten, nämlich dem verunreinigten Boden und den Schlämmen, dekontaminierten Boden mit rückgewonnenen Mineralstoffen bzw. Metallen und deren Salze.

Nach einer weiteren vorteilhaften Ausgestaltung der Erfindung wird das Gemisch aus Schlämmen und verunreinigtem Gut während der Reinigung und Aufbereitung zur Befeuchtung mit Wasser berieselt, um ein besseres Nachlösen der Schadstoffe für einen optimalen biologischen Abbau zu gewährleisten, da die Abbauraten und Abbauleistungen von der Bioverfügbarkeit der meist schwer wasserlöslichen bzw. gut an den Bodenpartikeln anhaftenden Kontaminanten abhängt. Das entstehende Sickerwasser wird aufgefangen und entweder direkt wieder in den Wasserkreislauf eingeschleust, oder vor dem Wiedereinschleusen über einen speziellen Bioreaktor belebt, d.h. die bereits enthaltenen Mikroorganismen werden dort schadstoffgezielt vermehrt. Diese Art der Befeuchtung erlaubt eine genaue Dosierung der Wassermenge.

Nach einer weiteren vorteilhaften Ausgestaltung der Erfindung wird das Gemisch aus Schlämmen und verunreinigtem Gut im Behandlungsraum oder in der Behandlungfläche durchmischt oder umgesetzt. Dadurch wird das Lösen der Schadstoffe in der flüssigen Phase begünstigt und die Angriffsmöglichkeit für die Mikroorganismen weiter verbessert.

Nach einer weiteren vorteilhaften Ausgestaltung der Erfindung wird dem Gemisch aus Schlämmen und verunreinigtem Gut Sauerstoff zugesetzt. Dies führt zu einem gesteigerten Schadstoffabbau durch die Mikroorganismen, da diese durch den Sauerstoff, der auch in Form von Luftsauerstoff eingebracht werden kann, zu schnellem Stoffwechsel und hoher Vermehrungsrate angeregt werden.

Nach einer weiteren vorteilhaften Ausgestaltung der Erfindung wird zur Entwässerung von verunreinigtem Gut mit zu hohem Feuchtigkeitsanteil dem Gut Trockenmaterial zugegeben. Auf diese Weise kann der Feuchtigkeitsanteil des verunreinigten Guts, an den Wert angepaßt werden, der zur Dekontaminierung mit Hilfe von Schlämmen besonders geeignet ist. Das Verfahren läßt sich damit auf nahezu alle Arten von verunreinigtem Gut anwenden.

Nach einer weiteren vorteilhaften Ausgestaltung der Erfindung wird als Trockenmaterial entwässerter, teilgetrockneter oder getrockneter Klärschlamm zugegeben.

Nach einer weiteren vorteilhaften Ausgestaltung der Erfindung wird zum Durchmischen und zum Einbringen von Sauerstoff in das Gemisch aus Schlämmen und verunreinigtem Gut, eine Einrichtung zum Mischen verwendet. Es kann sich dabei z.B. um einen Fallmischer oder einen Zwangsmischer handeln.

Nach einer weiteren vorteilhaften Ausgestaltung der Erfindung wird eine Einrichtung zum Mischen verwendet, die eine Injektordüse zum Einbringen von Sauerstoff in das Gemisch aus Schlämmen und verunreinigtem Gut aufweist.

Weitere Vorteile und vorteilhafte Ausgestaltungen der Erfindung sind den Ansprüchen entnehmbar.

## Patentansprüche

1. Verfahren zur Reinigung und Aufbereitung von verunreinigtem Gut mittels Mikroorganismen, bei welchem das verunreinigte Gut, die Verunreinigung abbauende Mikroorganismen und erforderlichenfalls Nährstoffe für die Mikroorganismen in einen Behandlungsraum oder in eine Behandlungsfläche eingebracht werden und dort so lange verbleiben, bis der gewünschte Dekontaminierungsgrad erreicht ist,
wobei dem verunreinigten Gut Schlämme zugefügt werden, die die Verunreinigungen abbauende Mikroorganismen und außerdem die Nährstoffe für diese Mikroorganismen enthalten, wonach das verunreinigte Gut mit den Schlämmen vermischt wird,
dadurch gekennzeichnet,
daß der Feuchtigkeitsgehalt des Gemischs einen von der Boden- und Schlammbeschaffenheit abhängigen Grenzwert nicht überschreitet,
so daß die Konsistenz des Gemischs aus verunreinigtem Gut und Schlämmen zum Aufbau einer Miete formerhaltend ist, und
daß der Feuchtigkeitsgehalt des Gemischs aus Schlämmen und verunreinigtem Gut 30 bis 50 % beträgt.

2. Verfahren nach Anspruch 1, dadurch gekennzeichnet, daß als Schlämme Klärschlämme aus privaten, kommunalen oder industriellen Abwasserreinigungsanlagen oder Speicheranlagen verwendet werden.

3. Verfahren nach Anspruch 1 oder 2, dadurch gekennzeichnet, daß das Gemisch aus Schlämmen und verunreinigtem Gut während der Reinigung und Aufbereitung zur Befeuchtung mit Wasser berieselt wird.

4. Verfahren nach einem der vorhergehenden Ansprüche, dadurch gekennzeichnet, daß das Gemisch aus Schlämmen und verunreinigtem Gut im Behandlungsraum oder in der Behandlungsfläche durchmischt oder umgesetzt wird.

5. Verfahren nach einem der vorhergehenden Ansprüche, dadurch gekennzeichnet, daß dem Gemisch aus Schlämmen und verunreinigtem Gut Sauerstoff zugesetzt wird.

6. Verfahren nach einem der vorhergehenden Ansprüche, dadurch gekennzeichnet, daß zur Entwässerung von verunreinigtem Gut mit zu hohem Feuchtigkeitsanteil dem Gut Trockenmaterial zugegeben wird.

7. Verfahren nach Anspruch 6, dadurch gekennzeichnet, daß als Trockenmaterial entwässerter, teilgetrockneter oder getrockneter Klärschlamm zugegeben wird.

8. Verfahren nach einem der vorhergehenden Ansprüche, dadurch gekennzeichnet, daß zum Durchmischen und zum Einbringen von Sauerstoff in das Gemisch aus Schlämmen und verunreinigtem Gut eine Einrichtung zum Mischen und/oder Einblasen verwendet wird.

9. Verfahren nach einem der vorhergehenden Ansprüche dadurch gekennzeichnet, daß eine Einrichtung zum Mischen verwendet wird, die eine Injektordüse zum Einbringen von Sauerstoff in das Gemisch aus Schlämmen und verunreinigtem Gut aufweist.

## Claims

1. Process for purifying and treating polluted materials by means of microorganisms, in which the polluted material, the microorganisms and, if necessary, nutrients for those microorganisms are introduced in a treatment room or onto a treatment surface, and are to remain there until the desired degree of decontamination is reached, in which silts containing the impurity-decomposing microorganisms as well as the nutrients for those microorganisms are added to the polluted material, after which the polluted material and the silts are mixed, characterized in that the moisture content of the mixture does not exceed a limiting value that depends on the condition of both the soil and the silts, so that the consistency of the mixture between polluted material and silts is rigid enough for the construction of a clamp, and that the moisture content of the mixture between polluted material and silts amounts to 30 to 50%.

2. Process according to claim 1, characterized in that sludges from private, municipal, or industrial sewage and storage plants are used as silts.

3. Process according to claims 1 or 2, characterized in that the mixture between polluted material and silts is sprinkled with water for humidification during the treatment and purification process.

4. Process according to one of the above claims, characterized in that the mixture between silts and polluted material is intermixed or turned in the treatment room or on the treatment surface.

5. Process according to one of the above claims, characterized in that oxygen is added to the mixture between silts and polluted material.

6. Process according to one of the above claims, characterized in that a drying agent is added for the dehydration of polluted material with a too high moisture content.

7. Process according to claim 6, characterized in that dehydrated, partially dried or dried sludge is added as a drying agent.

8. Process according to one of the above claims, characterized in that a mixing and/or blowing device is used for mixing the mixture between silts and polluted material and adding the oxygen.

9. Process according to one of the above claims characterized in that a mixing device is used featuring an injection jet to add oxygen to the mixture between polluted material and silts.

## Revendications

1. Procédé de purification et de traitement de matières polluées au moyen de micro-organismes, où la matière polluée, les micro-organismes réduisant la pollution et en cas de besoin les substances nutritives des micro-organismes sont placés dans un espace ou sur une surface de traitement, où ils restent jusqu'à ce que le degré de décontamination voulu soit obtenu,
des boues contenant les micro-organismes réduisant la pollution ainsi que des substances nutrives pour ces micro-organismes étant rajoutées à la matière polluée, à la suite de quoi la matière polluée est mélangée avec la boue,
caractérisé par le fait
que le degré d'humidité du mélange ne dépasse pas une valeur limite dépendant de la nature du sol et de la boue,
si bien que la consistance du mélange de matière polluée et de boue permet de former un meulon,
et que le degré d'humidité du mélange de boue et de matière polluée est de 30 à 50 %.

2. Procédé selon la revendication 1, caractérisé par le fait que les boues utilisées sont des boues de curage provenant de stations d'épuration ou de stockage privées, communales ou industrielles.

3. Procédé selon la revendication 1 ou 2, caractérisé par le fait que le mélange de boue et matière polluée est aspergé d'eau pendant le nettoyage et le traitement afin de l'humidifier.

4. Procédé selon l'une des revendications précédentes, caractérisé par le fait que le mélange de boue et de matière polluée est malaxé ou déplacé dans l'espace de traitement ou sur la surface de traitement.

5. Procédé selon l'une des revendications précédentes, caractérisé par le fait que de l'oxygène est rajouté au mélange de boue et de matière polluée.

6. Procédé selon l'une des revendications précédentes, caractérisé par le fait que de la matière sèche est rajoutée à la matière polluée, afin de déshydrater une matière ayant un degré d'humidité trop élevé.

7. Procédé selon la revendication 6, caractérisé par le fait que la matière sèche rajoutée est de la boue de curage déshydratée, partiellement séchée ou séchée.

8. Procédé selon l'une des revendications précédentes, caractérisé par le fait que pour malaxer et pour rajouter de l'oxygène au mélange de boue et de matière polluée, on utilise un dispositif de malaxage et/ou d'insufflation.

9. Procédé selon l'une des revendications précédentes, caractérisé par le fait que le dispositif utilisé pour le malaxage comporte un injecteur pour rajouter de l'oxygène au mélange de boue et de matière polluée.
